# FASCICULE DE BREVET EUROPEEN

(11) **EP 0 615 501 B1**
(45) Date de publication et mention de la délivrance du brevet: **04.12.1996**
(21) Numéro de dépôt: 93920709.8
(22) Date de dépôt: 13.09.1993
(51) Int. Cl.: B62D 5/24, B62D 3/08

(54) **DIRECTION ASSISTEE A COMPENSATION AUTOMATIQUE DE JEU**
HILFSKRAFTLENKUNG MIT AUTOMATISCHEM SPIELAUSGLEICH
POWER STEERING WITH AUTOMATIC PLAY COMPENSATION

(30) Priorité: 15.10.1992 ES 9202047
(43) Date de publication de la demande: 21.09.1994
(73) Titulaire: ALLIEDSIGNAL AUTOMOTIVE ESPANA, S.A., 08400 Barcelona (ES)
(72) Inventeur: CORTES GUASCH, Esteve, E-08304 Mataro (ES); SOLER BRUGUERA, Raimon, E-08400 Granollers (ES)
(74) Mandataire: Price, Nigel John King
(86) Numéro de dépôt international: EP9302473
(87) Numéro de publication internationale: WO9408835

(56) Documents cités:
- EP-A- 0 299 250
- EP-A- 0 303 147
- FR-A- 2 117 360
- GB-A- 760 196
- US-A- 4 128 046

## Description

La présente invention concerne un dispositif de roulement à jeu réduit pour un système de direction assistée du type de ceux qui comprennent :
- un boîtier dont un volume interne étanche prend au moins partiellement la forme d'un cylindre de révolution autour d'un axe ;
- un arbre logé dans le volume interne du boîtier suivant la direction de cet axe, fixe en translation suivant cette direction et entraîné en rotation autour de cet axe, depuis l'extérieur du boîtier, par l'application d'un couple d'entrée sur une premièrede ses deux extrémités ;
- un piston coulissant axialement dans le volume interne du boîtier pour séparer ce volume en deux chambres de pression étanches soumises à des pressions respectives variant en fonction dudit couple d'entrée, ces pressions exerçant sur le piston une force de translation convertible en un couple de sortie, et
- un convertisseur de mouvement disposé entre le piston et l'arbre au voisinage de la seconde extrémité de ce dernier, pour convertir un mouvement de rotation de l'arbre en un mouvement de translation du piston ;
- l'arbre se trouvant ainsi soumis à des forces axiales de sens et d'intensité variables en fonction du couple d'entrée, et ce dispositif comprenant au moins un premier roulement disposé entre la première extrémité de l'arbre et le boîtier pour transmettre à ce dernier les forces axiales s'exerçant sur l'arbre depuis sa seconde extrémité vers la première, et
- un second roulement disposé entre la première extrémité de l'arbre et le boîtier.

Un dispositif de ce type est par exemple décrit dans le document EP-A-0 299 250.

Ces dispositifs font généralement usage soit d'un roulement spécial ou ayant fait l'objet d'une sélection, soit d'un roulement plus ordinaire, dont le jeu a été réduit grâce à des réglages multiples.

Quelle que soit la solution adoptée, les dispositifs de roulement à jeu réduit actuellement en usage présentent l'inconvénient d'être coûteux, et de ne montrer une efficacité maximale qu'au montage, l'usure étant susceptible de dégrader leurs performances.

Dans ce contexte, le but de la présente invention est de proposer un dispositif de roulement du type précédemment défini, mais doté d'une compensation de jeu automatique, c'est-à-dire exemptée de réglage et d'ajustage, et présentant une grande stabilité dans le temps.

A cette fin, le dispositif de l'invention est essentiellement caractérisé en ce que l'arbre présente, au voisinage de sa première extrémité, une rainure périphérique annulaire à section triangulaire rectangle, formant deux surfaces de roulement coniques centrées sur l'axe, une première de ces deux surfaces étant plutôt tournée vers la première extrémité de l'arbre et la seconde surface étant plutôt tournée vers la seconde extrémité de l'arbre, en ce que le boîtier offre, en regard de la première surface de roulement, une troisième surface de roulement parallèle à la première, en ce qu'une bague amovible est disposée autour de l'axe à proximité immédiate de la troisième surface de roulement pour offrir une quatrième surface de roulement en regard de la seconde et parallèle à elle, en ce que des premiers galets sont disposés entre les première et troisième surfaces de roulement pour y rouler et former ledit premier roulement, en ce que des seconds galets sont disposés entre les seconde et quatrième surfaces de roulement pour y rouler et former ledit second roulement, et en ce que des moyens élastiques en appui sur le boîtier sont prévus pour exercer sur l'arbre, par l'intermédiaire du second roulement, une force axiale dirigée de la seconde extrémité de cet arbre vers la première, et d'intensité supérieure aux forces axiales de sens contraire auxquelles cet arbre est soumis, ces moyens élastiques sollicitant ladite bague dans un sens qui tend à rapprocher la quatrième surface de roulement de la seconde.

Il est par ailleurs préférable, pour tenir compte des intensités respectives des forces axiales agissant sur l'arbre, de prévoir que les premiers galets soient plus nombreux que les seconds.

D'autres caractéristiques et avantages de l'invention ressortiront clairement de la description qui en est faite ci-après, à titre indicatif et nullement limitatif, en référence aux dessins annexés dans lesquels :
- La Figure 1 représente un dispositif du type de ceux dans lesquels peut être mise en oeuvre l'invention, replacé dans l'ensemble de son contexte fonctionnel ;
- La Figure 2 est une vue en coupe agrandie issue de la Figure 1 ;
- La Figure 3 est une vue en coupe semblable à la Figure 2, mais illustrant la mise en oeuvre d'un mode de réalisation de l'invention ; et
- La Figure 4 est une vue partielle en perspective d'un détail relatif à ce mode de réalisation de l'invention.

Par convention, tout couple de pièces mécaniques qui, en fonctionnement, se trouvent solidaires l'une de l'autre pourra, par souci de concision et de clarté, être considéré dans la présente description et/ou dans les revendications qu'elle supporte comme constitué d'une seule et même pièce, l'homme de l'art étant en mesure, sur la base des dessins et/ou de son expérience, de reconnaître, lorsqu'elle apparaît, la nécessité de prévoir un assemblage de deux pièces au lieu d'une pour la fabrication et/ou le montage du dispositif.

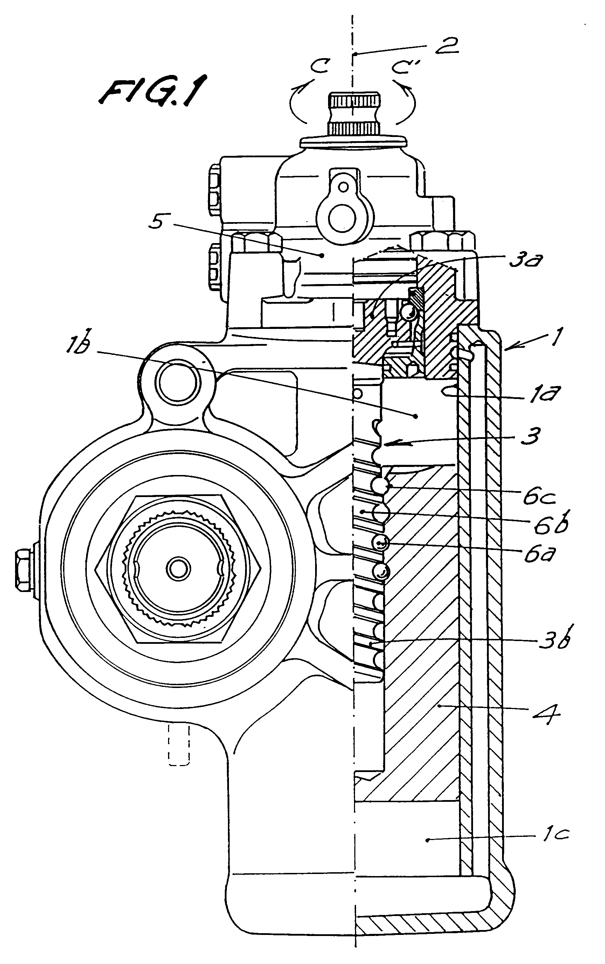

La Figure 1 représente, en coupe partielle, un système de direction assistée pour véhicule à moteur.

Un tel système comprend tout d'abord un boîtier 1 définissant un volume interne étanche dont une partie au moins prend la forme d'un cylindre de révolution la autour d'un axe 2.

Un arbre 3 est logé dans le volume interne du boîtier suivant la direction de l'axe 2, fixe en translation le long de cet axe, et susceptible d'être entraîné en rotation autour de ce même axe par l'application, sur une première de ses extrémités 3a, d'un couple C ou C' provenant d'un effort de rotation du volant du véhicule et transmis à travers le boîtier 1.

Un piston 4, entourant l'arbre 3 du côté de sa seconde extrémité 3b, coulisse axialement dans le volume interne du boîtier pour séparer ce dernier en deux chambres de pression étanches 1b, 1c ; ces dernières sont soumises à des pressions respectives contrôlées par un distributeur hydraulique 5 actionné par l'arbre 3 et variant donc en fonction du sens et de l'intensité du couple appliqué à cet arbre.

La différence entre ces pressions, s'exerçant sur le piston 4, est susceptible d'entraîner ce dernier en translation le long de l'axe 2, dans un sens ou dans l'autre, ce mouvement étant converti, par un engrenage (non visible) à crémaillère et secteur denté, en un mouvement de rotation de sortie transmis aux roues du véhicule.

Un convertisseur de mouvement, essentiellement formé de billes 6a, circulant dans des chemins hélicoïdaux 6b, 6c respectivement creusés, en regard l'un de l'autre, dans la surface externe de l'arbre 3 et dans la surface interne du piston 4, permet de convertir un mouvement de rotation de l'arbre en un mouvement de translation du piston, notamment pour obtenir un mouvement de rotation de sortie même en cas de panne du système d'assistance hydraulique.

Dans ces conditions, l'arbre 3 se trouve soumis, en fonction de l'intensité et du sens du couple qui lui est appliqué, à des forces d'intensité et de sens variables dirigés suivant l'axe 2.

En réalité, l'invention tire en partie son origine de l'observation du fait que les forces axiales les plus importantes auxquelles cet arbre est soumis résultent de l'application de pressions différentes dans les chambres 1b et 1c, et que, dans la mesure où l'arbre doit être rendu étanche à son interface avec l'atmosphère pour pouvoir être mû depuis l'extérieur du boîtier étanche 1, et où l'une ou l'autre des chambres est toujours à une pression supérieure à la pression atmosphérique lorsque la différence des pressions entre ces chambres n'est pas nulle, les forces axiales les plus importantes auxquelles l'arbre 3 est soumis sont toujours dirigées de sa seconde extrémité 3b vers sa première extrémité 3a, c'est-à-dire dans un sens qui tend à le faire sortir du boîtier.

La seule force axiale s'exerçant sur l'arbre dans le sens allant de sa première extrémité 3a vers la seconde 3b apparaît lors de l'application sur cet arbre d'un couple de rotation tendant à rapprocher le piston 4 de la première extrémité 3a de cet arbre, avant que ce couple ait atteint la valeur minimale permettant l'actionnement du distributeur hydraulique 5 et l'installation de pressions différentes dans les chambres 1b, 1c.

Cette force axiale est donc faible en fonctionnement normal, et sa valeur facile à déterminer puisque directement fonction de la valeur connue du couple d'actionnement du distributeur hydraulique.

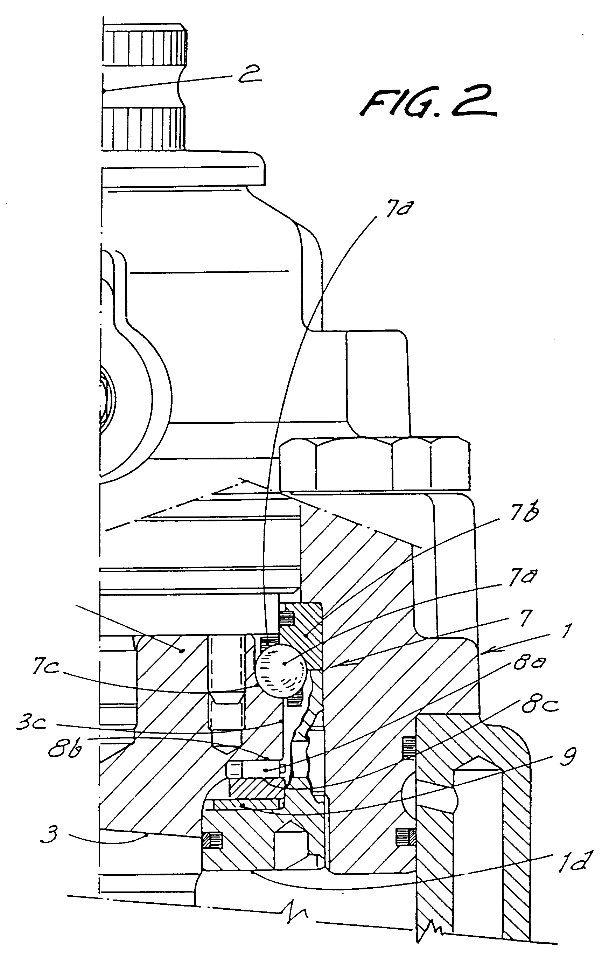

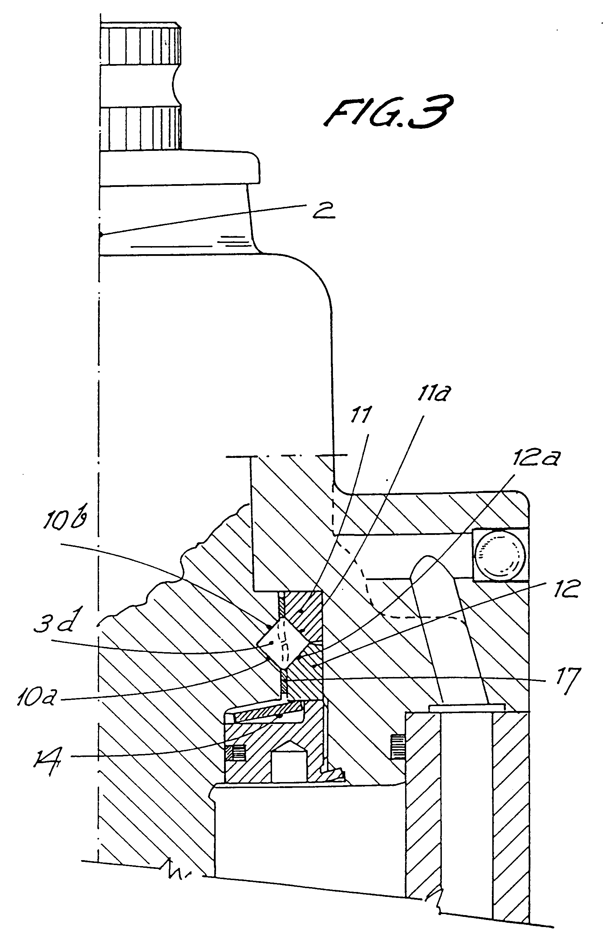

Le dispositif peut maintenant être décrit plus en détail en référence aux Figures 2 et 3, la Figure 2 étant un agrandissement de la Figure 1.

Le dispositif comprend d'abord un premier roulement 7, composé de billes 7a, de surfaces de roulement 7b, 7c, et d'un séparateur de billes 7d.

Ce roulement 7 est disposé entre la première extrémité 3a de l'arbre et le boîtier 1 et transmet à ce dernier les forces qui s'exercent axialement sur l'arbre dans la direction allant de sa seconde extrémité 3b vers la première extrémité 3a.

Comme illustré sur la Figure 2, la surface de roulement 7b est par exemple offerte par une bague entourant l'arbre 3 et s'appuyant contre le boîtier.

Dans le mode de réalisation de cette figure, l'arbre 3 présente un élargissement radial 3c au voisinage de sa première extrémité 3a, tandis que le boîtier 1 présente un rétrécissement radial complémentaire 1d retenant l'élargissement radial 3c prisonnier dans le boîtier 1.

Le dispositif comporte alors un second roulement 8, comprenant des aiguilles 8a et des surfaces de roulement 8b, 8c, la première surface de roulement 8b étant en partie constituée par une face axiale de l'élargissement radial 3c, la seconde surface de roulement 8c étant formée par une bague rapportée entourant l'arbre 3, et l'ensemble se trouvant emprisonné entre le rétrécissement radial 1d et l'élargissement radial 3c et sollicité par une force élastique dirigée de la seconde extrémité de l'arbre vers la première grâce à une rondelle Belleville 9 précontrainte, entourant l'arbre, et elle-même prisonnière entre ce rétrécissement 1d et cet élargissement 3c.

La force exercée par la rondelle Belleville est préférablement réglable et, en l'occurrence, susceptible d'être réglée par vissage du rétrécissement radial 1d sur le boîtier 1, et elle est ajustée à une valeur supérieure à la valeur maximale de la force axiale s'exerçant sur l'arbre 3 depuis sa première extrémité 3a vers la seconde 3b.

Dans le mode de réalisation de la Figure 3, l'arbre 3 présente, au voisinage de sa première extrémité 3a une rainure périphérique annulaire 3d adoptant une section en triangle rectangle et formant deux surfaces de roulement coniques 10a et 10b centrées sur l'axe 2.

La première, 10a, de ces deux surfaces est plutôt tournée vers la première extrémité 3a de l'arbre et par exemple à 45° avec la direction pointant vers cette extrémité, tandis que la seconde surface de roulement 10b est plutôt tournée vers l'autre extrémité 3b de l'arbre et par exemple à 45° de la direction pointant vers cette extrémité.

Une bague 11 entourant l'axe 3 et s'appuyant sur le boîtier 1 offre une troisième surface conique de roulement 11a centrée sur l'axe 2, disposée en regard de la première surface de roulement 10a, et parallèle à cette dernière.

De manière analogue, une bague 12 offre une quatrième surface de roulement 12a en regard de la seconde 10b et parallèle à elle, la différence étant cependant que la bague 12 ne prend pas appui sur le boîtier 1, ni de façon directe ni par l'intermédiaire de la bague 11.

En revanche, la bague 12 est sollicitée vers la bague 11 par une force élastique exercée par une rondelle Belleville 14 s'appuyant sur le boîtier 1, cette force étant supérieure à la force axiale maximale s'exerçant sur l'arbre 3 en direction de sa seconde extrémité 3b.

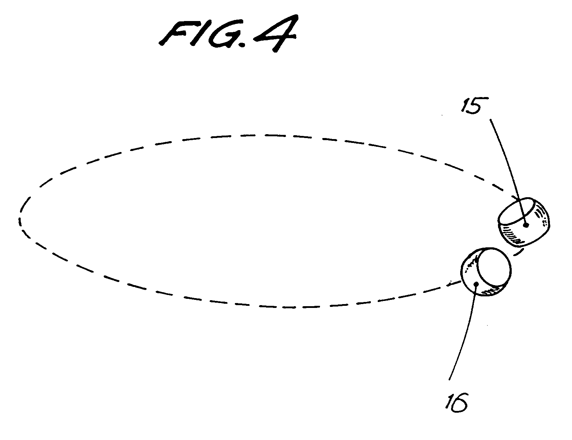

Des premiers galets, tels que 15 (Figure 4), sont disposés entre les première et seconde surfaces de roulement 10a, 11a pour y rouler et constituer un premier roulement avec elles.

De même, des seconds galets, tels que 16, sont disposés entre les troisième et quatrième surfaces de roulement 10b, 12a pour y rouler et constituer un second roulement avec elles.

De préférence, les galets des deux roulements sont séparés par des séparateurs 17, les premiers galets 15 étant plus nombreux que les seconds 16 et régulièrement intercalés entre ces derniers.

Le mode de réalisation illustré aux Figures 3 et 4 conduit à un encombrement très réduit pour un coût de réalisation très faible.

## Revendications

1. Dispositif de roulement à jeu réduit pour un système de direction assistée du type de ceux qui comprennent :
- un boîtier (1) dont un volume interne étanche prend au moins partiellement la forme d'un cylindre de révolution (1a) autour d'un axe (2) ;
- un arbre (3) logé dans le volume interne du boîtier suivant la direction de cet fixe en translation suivant cette direction et entraîné en rotation autour de cet axe, depuis l'extérieur du boîtier, par l'application d'un couple d'entrée sur une première (3a) de ses deux extrémités ;
- un piston (4) coulissant axialement dans le volume interne du boîtier pour séparer ce volume en deux chambres de pression étanches (1b, 1c) soumises à des pressions respectives variant en fonction dudit couple d'entrée, ces pressions exerçant sur le piston une force de translation convertible en un couple de sortie ; et
- un convertisseur de mouvement (6a, 6b, 6c), disposé entre le piston et l'arbre au voisinage de la seconde extrémité (3b) de ce dernier, pour convertir un mouvement de rotation de l'arbre en un mouvement de translation du piston, l'arbre se trouvant ainsi soumis à des forces axiales de sens et d'intensité variables en fonction du couple d'entrée, et ce dispositif comprenant au moins un premier roulement (7) disposé entre la première extrémité de l'arbre et le boîtier pour transmettre à ce dernier les forces axiales s'exerçant sur l'arbre depuis sa seconde extrémité vers la première,
- un second roulement (8a, 8b, 8c ; 10b, 12a, 16) disposé entre la première extrémité de l'arbre et le boîtier,
caractérisé en ce que l'arbre présente, au voisinage de sa première extrémité, une rainure périphérique annulaire (3d) à section triangulaire rectangle, formant deux surfaces de roulement coniques (10a, 10b) centrées sur l'axe (2), une première (10a) de ces deux surfaces étant plutôt tournée vers la première extrémité (3a) de l'arbre et la seconde surface (10b) étant plutôt tournée vers la seconde extrémité (3b) de l'arbre, en ce que le boîtier (1) en regard de la première surface de roulement, une troisième surface de roulement (11a) parallèle à la première, en ce qu'une bague amovible (12) est disposée autour de l'axe à proximité immédiate de la troisième surface de roulement (11a) pour offrir une quatrième surface de roulement (12a) en regard de la seconde (10b) et parallèle à elle, en ce que des premiers galets (15) sont disposés entre les première et troisième surfaces de roulement pour y rouler et former ledit premier roulement en ce que des seconds galets (16) sont disposés entre les seconde et quatrième surfaces de roulement pour y rouler et former ledit second roulement, et en ce que des moyens élastiques (9, 14) en appui sur le boîtier sont prévus pour exercer sur l'arbre, par l'intermédiaire du second roulement, une force axiale dirigée de la seconde extrémité de cet arbre vers la première, et d'intensité supérieure aux forces axiales de sens contraire auxquelles cet arbre est soumis, ces moyens élastiques sollicitant ladite bague dans un sens qui tend à rapprocher la quatrième surface de roulement de la seconde.

2. Dispositif suivant la revendication 1, caractérisé en ce que les premiers galets (15) sont plus nombreux que les seconds (16).

## Claims

1. Rolling-contact bearing device with reduced clearance for a power-assisted steering system of the type of those which comprise:
- a casing (1) having a sealed internal volume which at least partially assumes the form of a cylinder of revolution (1a) about an axis (2);
- a shaft (3) housed in the internal volume of the casing along the direction of this axis, translationally fixed along this direction and rotationally driven about this axis, from the outside of the casing, by the application of an input torque on a first (3a) of its two ends;
- a piston (4) sliding axially in the internal volume of the casing so as to separate this volume into two sealed pressure chambers (1b, 1c) subjected to respective pressures varying as a function of the said input torque, these pressures exerting on the piston a translational force which can be converted into an output torque; and
- a movement converter (6a, 6b, 6c), arranged between the piston and the shaft in the vicinity of the second end (3b) of the latter, so as to convert a rotational movement of the shaft into a translational movement of the piston, the shaft thus being subjected to axial forces of variable intensity and direction as a function of the input torque, and this device comprising at least a first rolling-contact bearing (7) arranged between the first end of the shaft and the casing so as to transmit to the latter the axial forces being exerted on the shaft from its second end towards the first,
- a second rolling-contact bearing (8a, 8b, 8c; 10b, 12a, 16) arranged between the first end of the shaft and the casing,
characterized in that the shaft has, in the vicinity of its first end, an annular peripheral groove (3d) of right triangular cross section, forming two conical rolling surfaces (10a, 10b) centered on the axis (2), a first (10a) of these two surfaces being rather turned towards the first end (3a) of the shaft and the second surface (10b) being rather turned towards the second end (3b) of the shaft, in that the casing (1) has, facing the first rolling surface, a third rolling surface (11a) parallel to the first, in that a removable ring (12) is arranged around the axis in the immediate proximity of the third rolling surface (11a) so as to offer a fourth rolling surface (12a) facing the second (10b) and parallel to it, in that first rollers (15) are arranged between the first and third rolling surfaces so as to roll thereon and to form the said first rolling-contact bearing, in that second rollers (16) are arranged between the second and fourth rolling surfaces to roll thereon and to form the said second rolling-contact bearing, and in that elastic means (9, 14) bearing on the casing are provided so as to exert on the shaft, via the second rolling-contact bearing, an axial force directed from the second end of this shaft towards the first, and of greater intensity than the axial forces in the opposite direction to which this shaft is subjected, these elastic means forcing the said ring in a direction which tends to move the fourth rolling surface closer to the second.

2. Device according to Claim 1, characterized in that the first rollers (15) are more numerous than the second rollers (16).

## Patentansprüche

1. Wälzlageranordnung mit vermindertem Spiel für ein Servolenkungssystem mit:
- einem Gehäuse (1), bei dem ein dichtes Innenvolumen wenigstens teiweise die Form eines Rotationszylinders (1a) mit einer Achse (2) aufweist;
- einer Welle (3), die in dem Innenvolumen des Gehäuses entlang der Richtung dieser Achse angeordnet ist, entlang dieser Richtung translationsfest ist und um diese Achse von außerhalb des Gehäuses durch Aufbringen eines Eingangsmomentes auf ein erstes Ende (3a) ihrer beiden Enden in Drehung versetzt wird;
- einem Kolben (4), der axial in dem Innenvolumen des Gehäuses gleitet, um dieses Volumen in zwei dichte Druckkammern (1b, 1c) zu unterteilen, die Drücken ausgesetzt sind, die sich in Abhängigkeit von dem Eingangsmoment ändern, wobei diese Drücke auf den Kolben eine Translationskraft ausüben, die in ein Ausgangsmoment umsetzbar ist; und
- einem Bewegungsumsetzer (6a, 6b, 6c), der zwischen dem Kolben und der Welle in der Nähe des zweiten Endes (3b) der Welle angeordnet ist, um eine Drehbewegung der Welle in eine Translationsbewegung des Kolbens umzusetzen, wobei die Welle dabei axialen Kräften ausgesetzt ist, deren Richtung und Stärke sich in Abhängigkeit von dem Eingangsmoment ändert, und wobei diese Vorrichtung außerdem wenigstens ein erstes Wälzlager (7) enthält, das zwischen dem ersten Ende der Welle und dem Gehäuse angeordnet ist, um auf dieses die axialen Kräfte zu übertragen, die auf die Welle von ihrem zweiten Ende zum ersten ausgeübt werden;
- einem zweiten Wälzlager (8a, 8b, 8c; 10b, 12a, 16), das zwischen dem ersten Ende der Welle und dem Gehäuse angeordnet ist,
dadurch gekennzeichnet, daß die Welle in der Nähe ihres ersten Endes eine ringförmige Umfangsnut (3d) mit dem Querschnitt eines rechtwinkligen Dreiecks aufweist, die zwei auf die Achse (2) zentrierte, konische Laufbahnen (10a, 10b) bildet, wobei eine erste Bahn (10a) dieser beiden Bahnen mehr zum ersten Ende (3a) der Welle gerichtet ist und die zweite Bahn (10b) mehr zum zweiten Ende (3b) der Welle gerichtet ist, daß das Gehäuse gegenüber der ersten Laufbahn eine dritte Laufbahn (11a) bietet, die parallel zur ersten ist, daß um die Achse herum in unmittelbarer Nähe der dritten Laufbahn (11a) ein abnehmbarer Ring (12) angeordnet ist, um gegenüber der zweiten Laufbahn (10b) und parallel zu dieser eine vierte Laufbahn (12a) zu bieten, daß erste Wälzkörper (15) zwischen der ersten und der dritten Laufbahn angeordnet sind, um dort abzuwälzen und das erste Wälzlager zu bilden, daß zweite Wälzkörper (16) zwischen der zweiten und der vierten Laufbahn angeordnet sind, um dort abzuwälzen und das zweite Wälzlager zu bilden, und daß sich an dem Gehäuse abstützende Federmittel (9, 14) vorgesehen sind, um auf die Welle mittels des zweiten Wälzlagers eine Axialkraft auszuüben, die von dem zweiten Ende der Welle zum ersten gerichtet ist und deren Betrag größer als die entgegengesetzt gerichteten Axialkräfte ist, denen die Welle ausgesetzt ist, wobei diese Federmittel den Ring in einer Richtung beaufschlagen, welche die vierte Laufbahn an die zweite anzunähern sucht.

2. Anordnung nach Anspruch 1, dadurch gekennzeichnet, daß die Anzahl der ersten Wälzkörper (15) größer als die Anzahl der zweiten Wälzkörper (16) ist.
